# EUROPEAN PATENT SPECIFICATION

(11) **EP 1 038 932 B1**
(45) Date of publication and mention of the grant of the patent: **25.01.2006**
(21) Application number: 99203074.2
(22) Date of filing: 20.09.1999
(51) Int. Cl.: C09D 17/00, C09B 67/00

(54) **Universal colouring agents**
Universalfarbmittel
Colorants universels

(30) Priority: 25.03.1999 IT MI990617
(43) Date of publication of application: 27.09.2000
(73) Proprietor: J Colors S.p.A., 20020 Lainate (Milano) (IT)
(72) Inventor: Goebel Junghanns, Carlo, 20131 Milano (IT); Pagnoni, Angelo, 20020 Lainate (Milano) (IT)
(74) Representative: Long, Giorgio

(56) References cited:
- EP-A- 0 937 760
- EP-A- 0 974 628

## Description

The present invention relates to universal colouring compositions.

The expression "universal colouring compositions" refers to a series of colouring pastes comprising pigments, dispersants and solvents which are suitable for mixing with a wide range of resinous paint bases in the preparation of coloured paint products.

It is known that a coloured paint can be prepared by mixing, in a suitable mixer, a universal colouring composition with an opaque or transparent resinous paint base, the two being chosen and mixed together in predefined ratios as a function of the desired colour of the paint, selected from a suitable colour chart.

It is generally possible to prepare paints with a wide variety of colours and colour gradations using a limited number (series) of universal colouring compositions and paint bases.

It is also known that, in order for a colouring composition to be considered as "universal", the dispersants contained therein must be compatible with the widest possible variety of paint-base resins, such as, for example, acrylic, epoxy, alkyd, polyester, polyvinyl, etc. resins.

The dispersants must also be soluble or dispersible in polar and apolar solvents, and capable of interacting with polar moieties and functional groups of various organic and inorganic pigments, so as to effectively disperse the pigments in the colouring composition, to stabilize its colour and gloss and to prevent flocculation of the pigments for a long time both in the universal colouring compositions and in the final coloured paints.

For these reasons, various low molecular weight surfactants, such as, for example, a number of sodium sulphosuccinates, have been used as dispersants.

However, these dispersants are not entirely satisfactory since some of them do not have the required compatibility with a wide range of pigments or paint-base resin systems, while others, although being compatible with various pigments and resin systems, have a negative impact on the colouring properties of the final paints or make them considerably more expensive.

Moreover, in order to obtain efficient dispersion of the pigments, the dispersants mentioned above are used in combination with small amounts of dispersion coadjuvant compounds generally consisting of ethoxylated alkylphenols, in particular ethoxylated nonylphenols.

These compounds have wetting and dispersing properties and lower the surface tension of most dispersants with which they are mixed, thus enhancing their interaction with the functional groups of the pigments.

However, along with these useful properties, ethoxylated alkylphenols have a number of serious drawbacks associated with their highly negative impact on the environment.

For this reason, the current trend in the paints industry is towards omitting ethoxylated alkylphenols from colouring compositions.

It has been found that using Disperbyk®-183 as a dispersant solves the drawbacks of the prior art.

Specifically, it has been found that Disperbyk®-183 is capable of efficiently dispersing a wide variety of organic and inorganic pigments for a long time without the aid of ethoxylated alkylphenols, and gives the pigments colour stability and better gloss.

In addition, universal colouring compositions containing it can be effectively mixed with a large number of water-based or organic-based resinous paint products without any flocculation of the pigment or debasement of the colouring properties of the final paints arising.

An example of such compositions can be found in the European patent application EP 0 937 760 A which describes universal coloring compositions comprising 5-70% by weight of pigments, 1-50% by weight of polymeric dispersants, preferably Disperbyk®-183, and 20-80% by weight of solvents and have a pigments/dispersants weight ratio ranging from 0.1:1 to 15:1. The pigments are organic pigments chosen among: P.B.7, P.B.15:2, P.B.15:4, P.G.7, P.R.19, P.R.19, P.R.122, P.R.168/112, P.V.23, P.Y.3, P.Y.74, P.Y.74, P.Y.74/83, P.Y.83 and inorganic pigments chosen among: P.B.11, P.R.101, P.W.6 and P.Y.42.

Disperbyk®-183 is the trade name for a polymer solution sold by the company BYK-Chemie GmbH. This product is thus known and widely available on the market.

The pigments in the universal colouring compositions according to the invention are conventional organic or inorganic pigments suitable for preparing coloured paint products and are chosen from the coloured pigments which have the following international Colour Index classifications: P.Y. 175, P.Y. 139, P.R. 254 and P.R. 254/257.

The solvents for the universal colouring compositions according to the invention are preferably chosen from the group comprising water, water-soluble organic solvents and mixtures thereof.

Ethylene glycol, diethylene glycol, propylene glycol and dipropylene glycol are particularly preferred as water-soluble organic solvents.

The solvents are added to the colouring compositions according to the invention in amounts such that the viscosity of the compositions is appropriately adjusted in the range 0.8-0.9 Pa.s (8.0-9.0 poise) at 20°C.

In addition to the ingredients mentioned above, the compositions according to the invention can also comprise, up to 3% by weight relative to the weight of the composition, other conventional additives such as viscosity modifiers, hydrating agents, antifoaming agents, biocides, diluents and surfactants, with the proviso that these compositions are, in all cases, free of ethoxylated alkylphenols.

Among the resins of water-based paint products which are compatible with the universal colouring compositions according to the invention, mention may be made, by way of non-limiting example, of various types of copolymers, such as vinyl versatate, acrylic copolymers, styrene butadiene and modified alkyd emulsions.

Among the resins of organic-solvent-based paint products which are compatible with the universal colouring compositions according to the invention, mention may be made, by way of example, of short-oil, medium-oil and long-oil alkyd resins and short-chain, medium-chain and long-chain vinyl and acrylic resins.

The universal colouring compositions according to the invention can be prepared by conventional procedures. They can be prepared, for example, by blending a mixture comprising the pigment, the dispersant and the solvent in a ball mill, a sand mill or a colloidal mill or in a high-speed and high-shear mixer until a uniform dispersion is obtained.

The colouring compositions according to the invention are preferably prepared by first premixing the dispersant with the solvent in a high-speed disperser, adding the pigment particles to the premix of the abovementioned components and blending the resulting mixture in a ball mill for a period required to obtain a uniform dispersion of the pigments and the desired viscosity of the composition.

In particular, four universal colouring compositions according to the invention were prepared. Each composition can be obtained by first premixing, with stirring in a high-speed disperser, a dispersant with a mixture of water and propylene glycol, adding the pigments to the premix of the abovementioned components and blending the resulting mixture in a ball mill for a period required to obtain a uniform dispersion of the pigments and the desired viscosity of the composition.

In each composition, the dispersant Disperbyk®-183 is used in a weight percentage of between 5 and 19% relative to the total weight of the composition, as a mixture with other known dispersants (for example the commercial product Serad® FN-265) in an amount of from 2 to 14% by weight relative to the total weight of the composition. A mixture of water and propylene glycol in a ratio ranging between 1:1.3 and 1:2 is used as solvent. The pigment is present in an amount by weight of from 25 to 35%, and is chosen among: P.Y. 175, P.Y.139, P.R.254 and P.R. 254/257.

In order to obtain universal colouring compositions with the desired properties and stability, it is essential for each of the components to be present in the ratios and amounts indicated.

Table 1 gives the classes of coloured pigments according to the international Colour Index classification and the weight ratios of the mixtures of water and propylene glycol used for each of the compositions.

**TABLE 1**

| Name | Pigment | Water/glycol weight ratio | Type of pigment |
|---|---|---|---|
| Proprietary yellow | P.Y. 175 | 1:2 | Organic |
| Indian yellow | P.Y. 139 | 1:2 | Organic |
| Pyrrole red | P.R. 254 | 1:1.5 | Organic |
| Bordeaux | P.R. 254/257 | 1:1.3 | Organic |

In Table 2, on the other hand, the weight percentages of the components and the viscosity are given for each composition.

**TABLE 2**

| Name | Pigment % by weight | Disperbyk®-183 % by weight | Other dispersants % by weight | Viscosity |
|---|---|---|---|---|
| Proprietary yellow | 25 | 18 | 2 | 0.85 Pa.s |
| | | | | (8.5 POISE) |
| Indian yellow | 32 | 19 | 2 | 0.85 Pa.s |
| | | | | (8.5 POISE) |
| Pyrrole red | 35 | 5 | 14 | 0.8 Pa.s |
| | | | | (8.0 POISE) |
| Bordeaux | 35 | 5 | 14 | 0.9 Pa.s |
| | | | | (9.0 POISE) |

## Claims

1. Universal colouring compositions comprising pigments in an amount by weight ranging between 25 and 35%, the dispersant Disperbyk®-183 in an amount by weight ranging between 5 and 19% and other dispersants in a total amount by weight ranging between 2 and 14%, the remainder of the composition consisting of a mixture of water/propylene glycol in a ratio between 1:1.3 and 1:2, **characterized in that** the pigments are chosen among: P.Y. 175, P.Y. 139, P.R. 254 and P.R. 254/257.

2. Universal colouring composition according to claim 1, having the following composition, expressed as percentages by weight relative to the total weight of the composition:
pigment P.Y. 175, 25% by weight, Disperbyk®-183, 18% by weight, other dispersants, 2% by weight, water/propylene glycol in a weight ratio of 1:2 and a viscosity of 0.85 Pa.s (8.5 poise).

3. Universal colouring composition according to claim 1, having the following composition, expressed as percentages by weight relative to the total weight of the composition:
pigment P.Y. 139, 32% by weight, Disperbyk®-183, 19% by weight, other dispersants, 2% by weight, water/propylene glycol in a weight ratio of 1:2 and a viscosity of 0.85 Pa.s (8.5 poise).

4. Universal colouring composition according to claim 1, having the following composition, expressed as percentages by weight relative to the total weight of the composition:
pigment P.R. 254, 35% by weight, Disperbyk®-183,5% by weight, other dispersants, 14% by weight, water/propylene glycol in a weight ratio of 1:1.5 and a viscosity of 0.8 Pa.s (8 poise).

5. Universal colouring composition according to claim 1, having the following composition, expressed as percentages by weight relative to the total weight of the composition:
pigment P.R. 254/257, 35% by weight, Disperbyk®-183, 5% by weight, other dispersants, 14% by weight, water/propylene glycol in a weight ratio of 1:1.3 and a viscosity of 0.9 Pa.s (9 poise).

## Patentansprüche

1. Universalfarbzusammensetzungen, die Pigmente in einer Gewichtsmenge im Bereich zwischen 25 und 35 %, das Dispergiermittel Disperbyk®-183 in einer Gewichtsmenge im Bereich zwischen 5 und 19 % und andere Dispergiermittel in einer Gesamtgewichtsmenge im Bereich zwischen 2 und 14 % umfassen, wobei der Rest der Zusammensetzung aus einem Gemisch von Wasser/Propylenglykol in einem Verhältnis zwischen 1:1,3 und 1:2 besteht, die **dadurch gekennzeichnet sind, dass** die Pigmente aus P.Y. 175, P.Y. 139, P.R. 254 und P.R. 254/257 ausgewählt sind.

2. Universalfarbzusammensetzung nach Anspruch 1 mit der folgenden Zusammensetzung, die als Gewichtsprozentangaben, bezogen auf das Gesamtgewicht der Zusammensetzung ausgedrückt ist: 25 Gew.-% Pigment P.Y. 175, 18 Gew.-% Disperbyk®-183, 2 Gew.-% andere Dispergiermittel, Wasser/Propylenglykol in einem Gewichtsverhältnis von 1:2 und einer Viskosität von 0,85 Pa·s (8,5 Poise).

3. Universalfarbzusammensetzung nach Anspruch 1 mit der folgenden Zusammensetzung, die als Gewichtsprozentangaben, bezogen auf das Gesamtgewicht der Zusammensetzung ausgedrückt ist: 32 Gew.-% Pigment P.Y. 139, 19 Gew.-% Disperbyk®-183, 2 Gew.-% andere Dispergiermittel, Wasser/Propylenglykol in einem Gewichtsverhältnis von 1:2 und einer Viskosität von 0,85 Pa·s (8,5 Poise).

4. Universalfarbzusammensetzung nach Anspruch 1 mit der folgenden Zusammensetzung, die als Gewichtsprozentangaben, bezogen auf das Gesamtgewicht der Zusammensetzung ausgedrückt ist: 35 Gew.-% Pigment P.Y. 254, 5 Gew.-% Disperbyk®-183, 14 Gew.-% andere Dispergiermittel, Wasser/Propylenglykol in einem Gewichtsverhältnis von 1:1,5 und einer Viskosität von 0,8 Pa·s (8 Poise).

5. Universalfarbzusammensetzung nach Anspruch 1 mit der folgenden Zusammensetzung, die als Gewichtsprozentangaben, bezogen auf das Gesamtgewicht der Zusammensetzung ausgedrückt ist: 35 Gew.-% Pigment P.Y. 254/257, 5 Gew.-% Disperbyk®-183, 14 Gew.-% andere Dispergiermittel, Wasser/Propylenglykol in einem Gewichtsverhältnis von 1:1,3 und einer Viskosität von 0,9 Pa·s (9 Poise).

## Revendications

1. Compositions de coloration universelles comprenant des pigments en une quantité en poids qui varie entre 25 et 35 %, le dispersant Disperbik®-183 en une quantité en poids qui varie entre 5 et 19 % et d'autres dispersants en une quantité totale en poids qui varie entre 2 et 14 %, le reste de la composition se composant d'un mélange d'eau/de glycol de propylène selon un rapport entre 1:1,3 et 1:2, **caractérisées en ce que** les pigments sont choisis parmi : P.Y. 175, P. Y. 139, P.R. 254 et P.R. 254/257.

2. Composition de coloration universelle selon la revendication 1, ayant la composition suivante, exprimée selon des pourcentages en poids par rapport au poids total de la composition : le pigment P.Y., 175,25 % en poids, le Disperbik®-183, 18 % en poids, les autres dispersants, 2 % en poids, l'eau/le glycol de propylène selon un rapport en poids de 1:2 et une viscosité de 0, 85 Pa (8,5 poise).

3. Composition de coloration universelle selon la revendication 1, ayant la composition suivante, exprimée selon des pourcentages en poids par rapport au poids total de la composition : le pigment P.γ., 139,32 % en poids, le Disperbik®-183, 19 % en poids, les autres dispersants, 2 % en poids, l'eau/le glycol de propylène selon un rapport en poids de 1:2 et une viscosité de 0,85 Pa (8,5 poise).

4. Composition de coloration universelle selon la revendication 1, ayant la composition suivante, exprimée selon des pourcentages en poids par rapport au poids total de la composition : le pigment P.R., 254,35 % en poids, le Disperbik®-183, 5 % en poids, les autres dispersants, 14 % en poids, l'eau/le glycol de propylène selon un rapport en poids de 1:1,5 et une viscosité de 0,8 Pa (8 poise).

5. Composition de coloration universelle selon la revendication 1, ayant la composition suivante, exprimée selon des pourcentages en poids par rapport au poids total de la composition : le pigment P.R. 254/257, 35 % en poids, le Disperbik®-183, 5 % en poids, les autres dispersants, 14 % en poids, l'eau/le glycol de propylène selon un rapport en poids de 1:1,3 et une viscosité de 0,9 Pa (9 poise).
